# EUROPEAN PATENT APPLICATION

(11) **EP 1 264 854 A1**
(43) Date of publication of application: **11.12.2002**
(21) Application number: 02012297.4
(22) Date of filing: 04.06.2002
(51) Int. Cl.: C08G 65/336, C08G 77/46, C08L 83/12

(54) **Curable composition**

(30) Priority: 06.06.2001 JP 2001171248
(71) Applicant: ASAHI GLASS COMPANY LTD., Tokyo 100-8405 (JP)
(72) Inventor: Tanaka, Hideaki, Kamisu-cho, Kashima-gun, Ibaraki (JP); Kashiwame, Josho, Kamisu-cho, Kashima-gun, Ibaraki (JP); Yamamoto, Hiroshi, Kanagawa-ku, Yokohama-shi, Kanagawa (JP); Suzuki, Chitoshi, Kamisu-cho, Kashima-gun, Ibaraki (JP); Sugiyama, Kayoko, Kawasaki-shi, Kanagawa (JP); Watabe, Takashi, Yokohama-shi, Kanagawa (JP)
(74) Representative: Hartz, Nikolai F., Dr.

(57) **Abstract**

A curable composition comprising a reactive silicon group-containing oxyalkylene polymer (A1) having at least one group of the formula 1 at its molecular terminal and satisfying the following (a) to (c), and a curing accelerator:

-O-R⁰-SiXₐR¹ ₃₋ₐ Formula 1

wherein R⁰ is a C₁₋₂₀ bivalent hydrocarbon group which may have -CONH-, -O-, -S-, -CO- or -NH-, R¹ is a C₁₋₁₀ monovalent hydrocarbon group, X is a hydroxyl group or a hydrolysable group, and a is 1, 2 or 3, provided that when a plurality of R¹ are present, they may be the same or different from one another, and when a plurality of X are present, they may be the same or different from one another;
(a) the molecular weight per terminal group (M_{c}) is at least 5,000,
(b) the ratio (M_{w}/Mₙ) of the weight average molecular weight (M_{w}) to the number average molecular weight (Mₙ) is at least 1.5, and
(c) the main chain is an oxyalkylene polymer which is obtainable by ring-opening polymerization of a cyclic ether using an active hydrogen atom-containing compound as an initiator and which is composed solely of structures based on the initiator and the cyclic ether.

## Description

The present invention relates to a curable composition which can be cured in the presence of moisture and which is useful for a sealant, an adhesive, etc.

A reactive silicon group-containing oxyalkylene polymer is liquid at room temperature, and its cured product maintains flexibility even at a relatively low temperature, whereby it is useful for a sealant, an adhesive or the like.

As such a reactive silicon group-containing oxyalkylene polymer, a polymer having a relatively high molecular weight is used, since it is excellent in physical properties such as curability, elongation and strength. As a method for obtaining such a polymer, a method is known wherein a polyol having a molecular weight which is readily available, such as a polyoxyalkylene diol having a molecular weight of about 3,000 (hereinafter referred to as a readily available polyol) is used as the starting material, and a polyhalogeno compound is reacted thereto to increase the molecular weight (crosslinking reaction), then an unsaturated bond is introduced to the molecular terminal, and a reactive silicon group is introduced to the unsaturated bond (JP-A-53-134095, JP-A-55-13768).

Further, a method is also proposed in which the terminal group of the readily available polyol is converted to an unsaturated bond-containing group, then a polyhydrogenated silicon compound is reacted thereto to increase the molecular weight, and further, a reactive silicon group is introduced to a remaining unsaturated bond (JP-A-55-13767, JP-A-55-13768, JP-A-59-131625, JP-A-57-158226, and JP-A-58-42691).

However, the reactive silicon group-containing polymers obtainable by the above methods, contain substantial amounts of reactive silicon group-containing polymers having low molecular weights derived from the readily available polyols as the starting materials. By the presence of such polymers having low molecular weights, they had a drawback that they are inferior in curability or elongation at break of their cured products. If their molecular weights are increased in order to improve the curability or the elongation at break of their cured products, the viscosities of the polymers tend to be too high, whereby there was a problem that practically useful curable compositions can hardly be obtained.

Further, JP-A-7-179744 proposes a method for producing a reactive silicon group-containing polymer, which comprises introducing a reactive silicon group to a terminal of an oxyalkylene polymer obtained by reacting an alkylene oxide in the presence of an initiator by means of a cesium type catalyst, or an oxyalkylene polymer obtained by crosslinking such an oxyalkylene polymer with a polyhalogeno compound. However, by this method, a polymer having a higher molecular weight could not be obtained without using such a crosslinking reaction by means of a polyhalogeno compound.

On the other hand, JP-A-3-72527 discloses a method for producing a reactive silicon group-containing oxyalkylene polymer by using an oxyalkylene polymer having a high molecular weight and a M_{w}/Mₙ ratio of less than 1.5, obtained by reacting an alkylene oxide in the presence of an initiator by means of a double metal cyanide complex as a catalyst. As compared with conventional polymers, the polymer obtained by this method has a low content of a polymer having a low molecular weight and thus has a characteristic such that, as compared at the same viscosity, it can be made to have a higher molecular weight, and it is excellent in curability and has a large elongation at break. However, a cured product obtained from a curable composition containing such a polymer, has had a drawback that since the strength at break and the elongation at break are high, a large stress will be exerted to the interface with a substrate of a sealant or an adhesive under a tension, whereby failure is likely to take place at the interface before the cohesive failure of the sealant itself.

It is an object of the present invention to provide a curable composition whereby the above problems are solved and thereby to provide a curable composition whereby the curability will not deteriorate, and the interfacial failure under tension is less likely to take place.

Namely, the present invention provides a curable composition comprising a reactive silicon group-containing oxyalkylene polymer (A1) having at least one group of the formula 1 at its molecular terminal and satisfying the following (a) to (c), and a curing accelerator:

-O-R⁰-SiXₐR¹ ₃₋ₐ Formula 1

wherein R⁰ is a C₁₋₂₀ bivalent hydrocarbon group which may have -CONH-, -O-, -S-, -CO- or -NH-, R¹ is a C₁₋₁₀ monovalent hydrocarbon group, X is a hydroxyl group or a hydrolysable group, and a is 1, 2 or 3, provided that when a plurality of R¹ are present, they may be the same or different from one another, and when a plurality of X are present, they may be the same or different from one another;
(a) the molecular weight per terminal group (M_{c}) is at least 5,000,
(b) the ratio (M_{w}/Mₙ) of the weight average molecular weight (M_{w}) to the number average molecular weight (Mₙ) is at least 1.5, and
(c) the main chain is an oxyalkylene polymer which is obtainable by ring-opening polymerization of a cyclic ether using an active hydrogen atom-containing compound as an initiator and which is composed solely of structures based on the initiator and the cyclic ether.

The above-mentioned reactive silicon group-containing oxyalkylene polymer (A1) (hereinafter referred to also as the polymer A1)), is preferably a polymer obtainable by converting a terminal hydroxyl group of a hydroxyl group terminal oxyalkylene polymer (B1) satisfying the following (a), (b) and (d), to a group of the formula 1:
(a) the molecular weight per terminal group (M_{c}) is at least 5,000,
(b) the ratio (M_{w}/Mₙ) of the weight average molecular weight (M_{w}) to the number average molecular weight (Mₙ) is at least 1.5, and
(d) it is a hydroxyl group terminal oxyalkylene polymer which is obtainable by ring-opening polymerization of a cyclic ether using an active hydrogen atom-containing compound as an initiator and which is composed solely of structures based on the initiator and the cyclic ether.

On the other hand, it is also preferred that the reactive silicon group-containing oxyalkylene polymer (A1) is a polymer obtainable by converting a group of the formula 2 in an oxyalkylene polymer (C1) having a group of the formula 2 at its molecular terminal and satisfying (a) to (c), to a group of the formula 1:

-O-R Formula 2

wherein R is a C₁₋₁₀ monovalent hydrocarbon group having an unsaturated bond.

In the present invention, "the molecular weight per terminal group (M_{c})" means [number average molecular weight (Mₙ)]/[the number (f) of terminal groups per molecule]. Here, f is the total number of terminal groups in one molecule. In a case where the number of hydrogen atoms of the initiator to be used for the preparation of the polymer (B) is 2 or more, f is equal to the number of active hydrogen atoms of the initiator. In a case where the number of hydrogen atoms is 1, an initiator residue at the terminal in the polymer (B) will also be a terminal group, and accordingly, f=2. Namely, f is equal to the total number of hydroxyl groups and terminal initiator residues in the polymer (B). Further, in a case where the initiator is a mixture of a plurality of initiators, it means the average value. Further, Mₙ and M_{w}/Mₙ mean Mₙ and M_{w}/Mₙ calculated as polystyrene, as measured by gel permeation chromatography (GPC) using tetrahydrofuran as a solvent.

Now, the present invention will be described in detail with reference to the preferred embodiments.

The reactive silicon group-containing oxyalkylene polymer having at least one group of the formula 1 at its molecular terminal will hereinafter be referred to as "polymer (A)". Among polymers (A), one satisfying (a) to (c) is the reactive silicon group-containing oxyalkylene polymer (A1). The hydroxyl group terminal oxyalkylene polymer as the starting material for the polymer (A), will be hereinafter referred to as "polymer (B)". Among polymers (B), one satisfying (a), (b) and (d) is the hydroxyl group terminal oxyalkylene polymer (B1) (hereinafter referred to also as "polymer (B1)"). Likewise, the oxyalkylene polymer having a group of the formula 2 at its molecular terminal, as the starting material for the polymer (A), will be hereinafter referred to as "polymer (C)". Among polymers (C), one satisfying (a) to (c) is the oxyalkylene polymer (C1) (hereinafter sometimes referred to also as "polymer (C1)").

Each of the polymers (A) to (C) and the polymers (A1) to (C1) is one type of an oxyalkylene polymer, and the main chain of such a polymer is meant for the portion having the terminal group excluded from the oxyalkylene polymer. For example, with respect to the polymer (A), it is meant for the portion having the group of the formula 1 (and, in some cases, the terminal initiator residues) excluded, and with respect to the polymer (B), it is meant for the portion having the hydroxyl group (and, in some cases, the terminal initiator residues) excluded. Likewise, with respect to the polymer (C), it is meant for the portion having the group of the formula 2 (and, in some cases, the terminal initiator residues) excluded. In a case where the polymer has two or more terminal groups, it is meant for the portion having all of such terminal groups excluded.

### With respect to polymer (A)

The polymer (A) can be produced by converting the terminal hydroxyl group of the polymer (B) obtainable by ring opening polymerization of a cyclic ether using an active hydrogen atom-containing compound as an initiator, to a group of the formula 1.

It is particularly preferred to produce the polymer (A) by converting the terminal hydroxyl group of the polymer (B) to a group of the formula 2 to obtain a polymer (C), and then converting the group of the formula 2 in the polymer (C) to a group of the formula 1.

### With respect to reactive silicon group

The reactive silicon group of the formula 1 will be described.

-O-R⁰-SiXₐR¹ ₃₋ₐ Formula 1

wherein R⁰ is a C₁₋₂₀ bivalent hydrocarbon group which may have -CONH-, -O-, -S-, -CO- or -NH-, R¹ is a C₁₋₁₀ monovalent hydrocarbon group, X is a hydroxyl group or a hydrolysable group, and a is 1, 2 or 3, provided that when a plurality of R¹ are present, they may be the same or different from one another, and when a plurality of X are present, they may be the same or different from one another.

When R⁰ is a hydrocarbon group having -CONH-, -O-, -S-, -CO- or -NH-, such a connecting group is present between carbon atoms of the hydrocarbon group. Otherwise, -CONH- or -CO- may be present at the terminal on the oxygen atom side of the hydrocarbon group. As described hereinafter, R⁰ is preferably a hydrocarbon group, a hydrocarbon group having -CONH- at the terminal on the oxygen atom side, or a hydrocarbon group having -S- between the carbon atoms.

R¹ is preferably an alkyl group having at most 8 carbon atoms, more preferably a methyl group, an ethyl group or a propyl group, particularly preferably a methyl group. X is preferably a hydroxyl group, a halogen atom, an acyloxy group or an alkoxy group, more preferably an alkoxy group, particularly preferably a methoxy group or an ethoxy group. a is preferably 2 or 3.

The following methods (i) to (iii) may be mentioned as the method for converting the terminal hydroxyl group of the polymer (B) to a group of the formula 1.

(i) A method of reacting a silicon hydride compound of the formula 3 to a polymer (C) obtained by converting a hydroxyl group of the polymer (B) to a group of the formula 2.

-O-R Formula 2

In the formula, R is a C₁₋₁₀ monovalent hydrocarbon group having an unsaturated bond, and R is preferably CH₂=CR⁴-R⁵-, as described hereinafter.

H-SiXₐR¹ ₃₋ₐ Formula 3

In the formula, R¹, X and a are as defined above.

Specific examples of the compound of the formula 3 include dimethoxymethylsilane, trimethoxysilane, triethoxysilane, diacetoxymethylsilane, chlorodimethylsilane, dichloromethylsilane, dichloroethylsilane and trichlorosilane. These compounds may be used alone or in combination as a mixture of two or more of them.

When the compound of the formula 3 is reacted to the polymer (C), a catalyst such as a platinum type catalyst (such as chloroplatinic acid, platinum metal, platinum chloride or a platinum/olefin complex), a rhodium type catalyst, a cobalt type catalyst, a palladium type catalyst or a nickel type catalyst, may be used. The amount of such a catalyst is preferably from 10 to 100 ppm, more preferably from 30 to 60 ppm, based on the polymer (C). The reaction temperature is usually from 30 to 150°C, preferably from 60 to 120°C, and the reaction is preferably carried out for from 1 to a few hours.

The polymer (C) can be obtained, for example, by a method wherein the terminal hydroxyl group of the polymer (B) is converted to an alkoxide of an alkali metal or an alkaline earth metal, and then reacted with a compound of the formula 4. The conversion to the alkoxide can be carried out by reacting an alkali metal, an alkaline earth metal, an alkali metal compound or an alkaline earth metal compound in an amount of from 0.8 to 1.5 times by mol, based on the terminal hydroxyl group of the polymer (B).

CH₂=CR⁴-R⁵-Y Formula 4

In the formula, R⁴ is a hydrogen atom or a methyl group, R⁵ is a single bond or a C₁₋₈ (in a case where R⁴ is a methyl group, C₁₋₇) bivalent hydrocarbon group, and Y is a halogen atom.

R⁴ is preferably a hydrogen atom. R⁵ is preferably a methylene group. Y may be a fluorine atom, a chlorine atom, a bromine atom or an iodine atom and is preferably a chlorine atom or a bromine atom.

Specific examples of the compound of the formula 4 include allyl chloride, allyl bromide, methallyl chloride and methallyl bromide. Allyl chloride is more preferred from the viewpoint of the cost and the reactivity. These compounds may be used alone or in combination as a mixture of two or more of them.

The compound of the formula 4 may be used in an amount of from 0.8 to 1.9 mols per 1 mol of the terminal hydroxyl group of the polymer (B). It is preferred to carry out the reaction at a reaction temperature of from 20 to 160°C, preferably from 70 to 150°C, for from 1 to 7 hours.

Further, by reacting the compound of the formula 4 and then the compound of the formula 3, to the polymer (B), the hydroxyl group of the polymer (B) will be converted to the group of the formula 5. The group of the formula 5 corresponds to the group of the formula 1 wherein -R⁰- is -R⁵-CHR⁴-CH₂-.

-O-R⁵-CHR⁴-CH₂-SiXₐR¹ ₃₋ₐ Formula 5

In the formula, R¹, R⁴, R⁵, X and a are as defined above.

(ii) A method of reacting a mercapto group-containing silicon compound of the formula 6 to a polymer (C) obtained by converting the hydroxyl group of the polymer (B) to a group of the formula 2.

HS-R⁶-SiXₐR¹ ₃₋ₐ Formula 6

In the formula, R⁶ is a C₁₋₁₀ bivalent hydrocarbon group, and R¹, X and a are as defined above.

The compound of the formula 6 may, for example, be 3-mercaptopropyl dimethoxymethylsilane, 3-mercaptopropyl trimethoxysilane or 3-mercaptopropyl triethoxysilane.

When the compound of the formula 6 is reacted, the reaction can be initiated by a radical-forming agent, radiation or heat. The radical-forming agent may, for example, be a compound of peroxide type, azo type or redox type, such as 2,2'-azobisisobutyronitrile, 2,2'-azobis(2-methylbutyronitrile), benzoyl peroxide, tert-butyl peroxide, acetyl peroxide or diisopropyl perdioxy dicarbonate, or a metal compound catalyst. It is preferred to carry out the reaction at a reaction temperature of from 20 to 200°C, preferably from 50 to 150°C, for from a few hours to a few tens hours.

By reacting the compound of the formula 4 and then the compound of the formula 6, to the polymer (B), the hydroxyl group of the polymer (B) will be converted to the group of the formula 7:

-O-R⁵-CHR⁴-CH₂-S-R⁶-SiXₐR¹ ₃₋ₐ Formula 7

In the formula, R¹, R⁴, R⁵, R⁶, X and a are as defined above.

(iii) A method of reacting the polymer (B) with an isocyanate group-containing silicon compound of the formula 8.

OCN-R⁷-SiXₐR¹ ₃₋ₐ Formula 8

In the formula, R⁷ is a C₁₋₁₀ bivalent hydrocarbon group, and R¹, X and a are as defined above.

The compound of the formula 8 may, for example, be 3-isocyanate propyltriethoxysilane, 3-isocyanate propyltrimethoxysilane, or 3-isocyanate propyldimethoxymethylsilane.

The conversion ratio of the terminal group of the polymer (B) to the reactive silicon group, can be optionally selected depending upon the physical properties of the desired cured product. If the number of the reactive silicon groups in the resulting polymer (A) is small, the cured product obtained by curing such a polymer tends to be soft and flexible.

### Polymer (B)

The following compounds may be mentioned as the active hydrogen atom-containing compound to be used as an initiator in the preparation of the polymer (B) which is a hydroxyl group terminal oxyalkylene polymer. The number of active hydrogen atoms in the initiator is preferably from 1 to 6.

A monovalent alcohol such as n-butyl alcohol, a monovalent unsaturated bond-containing alcohol such as allyl alcohol, a polyhydric alcohol such as ethylene glycol or propylene glycol, or an oxyalkylene polymer having a lower molecular weight than the desired product (polymer (B)) to be obtained by reacting an alkylene oxide to such an alcohol. These initiators may be used alone or in combination as a mixture of two or more of them.

The cyclic ether may, for example, be ethylene oxide, propylene oxide, 1,2-butylene oxide or 2,3-butylene oxide. These cyclic ethers may be used alone or in combination as a mixture of two or more of them. Propylene oxide is particularly preferred.

In the present invention, the catalyst for ring opening polymerization of a cyclic ether may, for example, be an alkali type catalyst, a double metal cyanide complex catalyst, a metal porphyrin catalyst or a phosphazene type catalyst. However, the alkali type catalyst is not preferred, since it is thereby difficult to obtain a polymer having a M_{c} of at least 5,000.

It is preferred to use a double metal cyanide complex catalyst, since it is possible to adjust Mₙ or M_{w}/Mₙ of the resulting polymer (B) by changing the catalyst structure such as the ligand or the polymerization conditions such as the polymerization temperature.

The double metal cyanide complex catalyst is preferably one having a structure wherein an organic ligand is coordinated on a catalyst composition such as Zn₃[Fe(CN)₆]₂, Zn₃[Co(CN)₆]₂, Fe[Fe(CN)₆] or Fe[Co(CN)₆], more preferably Zn₃[Co(CN)₆]₂ (i.e. a zinc hexacyanocobaltate complex).

Such a catalyst can be produced, for example, by coordinating an organic ligand on a reaction product obtained by reacting a metal halide salt with an alkali metal cyano metalate, in water.

The metal of the metal halide salt is preferably Zn(II) or Fe(II), particularly preferably Zn(II). As the metal halide salt, particularly preferred is zinc chloride.

As the metal constituting the cyano metalate of the alkali metal cyano metalate, Co(III) or Fe(III) is preferred, and particularly preferred is Co(III). As the alkali metal cyanometalate, potassium hexacyanocobaltate is preferred.

The organic ligand is preferably an alcohol and/or an ether. One or more selected from alcohols such as tert-butyl alcohol, a compound of the following formula 9, ethanol, sec-butyl alcohol, n-butyl alcohol, isobutyl alcohol, tert-pentyl alcohol, isopentyl alcohol and isopropyl alcohol, and ethers such as ethylene glycol dimethyl ether (hereinafter glyme), diglyme (diethylene glycol dimethyl ether), triglyme (triethylene glycol dimethyl ether), dioxane and a polyether having a Mₙ of from 150 to 5,000, are preferred.

Among them, particularly preferred is one or more selected from tert-butyl alcohol, the compound of the following formula 9 and glyme.

R⁸-C(CH₃)₂(OR⁹)ₙOH Formula 9

In the formula, R⁸ is a methyl group or an ethyl group, R⁹ is an ethylene group or a group having a hydrogen atom of such an ethylene group substituted by a methyl group or an ethyl group, and n is 1, 2 or 3.

As the compound of the formula 9, ethylene glycol mono-tert-butyl ether, propylene glycol mono-tert-butyl ether, ethylene glycol mono-tert-pentyl ether, or propylene glycol mono-tert-pentyl ether, is preferred, and ethylene glycol mono-tert-butyl ether is particularly preferred.

The double metal cyanide complex catalyst can be produced by heating and stirring a catalyst composition obtained by reacting a metal halide salt with an alkali metal cyano metalate, in an organic ligand (aging step), followed by filtration, washing and drying by conventional methods.

The number of the hydroxyl groups of the polymer (B) is equal to the number of active hydrogen atoms in the initiator to be used (in the case of a mixture of initiators, the average value). It is preferably from 1 to 6, more preferably from 1 to 4, particularly preferably 2 or 3. Further, the number of terminal groups in the polymer (B) is equal to the total number of terminal hydroxyl groups and terminal initiator residues. Namely, when the number of hydroxyl groups in the polymer (B) is 1, the number of terminal groups is 2.

### Polymer (A1)

The polymer (A1) in the present invention is one satisfying the following (a) to (c) among polymers (A).
(a) the molecular weight per terminal group (M_{c}) is at least 5,000,
(b) the ratio (M_{w}/Mₙ) of the weight average molecular weight (M_{w}) to the number average molecular weight (Mₙ) is at least 1.5, and
(c) the main chain is an oxyalkylene polymer which is obtainable by ring-opening polymerization of a cyclic ether using an active hydrogen atom-containing compound as an initiator and which is composed solely of structures based on the initiator and the cyclic ether.

The polymer (A1) is not a polymer obtained by crosslinking reaction, and accordingly, it does not have a residual group of a crosslinking agent on the main chain of the polymer. For example, a polymer having a residual group of a polyvalent halogeno compound, obtained by crosslinking by reacting a polyvalent halogeno compound as a crosslinking agent to a hydroxyl group terminal oxyalkylene polymer having a relatively low molecular weight, obtainable by ring open polymerization of a cyclic ether in the presence of an initiator and a catalyst, is not suitable as a starting material for the polymer (A1). Further, a polymer having a residual group of a polyvalent silicon hydride compound, obtained by crosslinking by reacting a polyvalent silicon hydride compound as a crosslinking agent to the polymer (C), is also not suitable as a starting material for the polymer (A1).

Such a polymer obtained by a crosslinking reaction, has a high viscosity, and the elongation of the cured product will be low. Accordingly, such a polymer is not suitable as a starting material for the polymer (A1) of the present invention. Here, the polyvalent halogeno compound means a hydrocarbon having at least two hydrogen atoms substituted by halogen atoms, and it may, for example, be methylene chloride or bromo chloromethane. The polyvalent silicon hydride compound is a compound having two hydrogen atoms directly bonded to a silicon atom, and it may, for example, be 1,1,3,3-tetramethyldisiloxane.

With the polymer (A1), M_{w}/Mₙ is at least 1.5, preferably at least 1.6, and it is preferably at most 2.0, particularly preferably at most 1.8.

Further, M_{c} is at least 5,000, preferably at most 15,000, more preferably at most 10,000, particularly preferably at most 7,500. If M_{c} is less than 5,000, the elongation of the cured product tends to be insufficient, such being undesirable. On the other hand, if it exceeds 15,000, the viscosity tends to be high, whereby handling tends to be difficult.

Further, Mₙ is preferably at least 7,500, more preferably at least 10,000, particularly preferably at least 15,000. Further, it is preferably at most 30,000, more preferably at most 22,000. M_{c} is one obtained by dividing Mₙ by f which is the number of terminal groups.

With the polymer (A1), the number of terminal groups per molecule is preferably from 2 to 6, more preferably from 2 to 4, particularly preferably from 2 to 3.5, most preferably from 2 to 3. In the polymer (A1), at least one of the terminal groups is the group of the formula 1, and it may have terminal groups other than the group of the formula 1. The number of groups of the formula 1 is preferably from 1 to 6, particularly preferably from 1 to 4, most preferably from 1 to 3. The polymer (A1) may be a mixture. In such a case, it is simply required that the average value is within the above numerical value range.

The polymer (A1) is particularly preferably one wherein f is from 2 to 3, and M_{c} is from 5,000 to 7,500.

In the present invention, the polymer (A1) is one produced without undergoing a crosslinking reaction, and it may be produced also by mixing oxyalkylene polymers (A) having reactive silicon groups and having different Mₙ or M_{w}/Mₙ, one another. However, it is particularly preferred to produce it by the following method (I) or (II).
(I) A method of converting a terminal hydroxyl group of a hydroxyl group terminal oxyalkylene polymer (B1) satisfying the following (a), (b) and (d), to a group of the formula 1.
(II) A method of converting a group of the formula 2 in an oxyalkylene polymer (C1) having a group of the formula 2 at its molecular terminal and satisfying the following (a) to (c), to a group of the formula 1.
   (a) the molecular weight per terminal group (M_{c}) is at least 5,000,
   (b) the ratio (M_{w}/Mₙ) of the weight average molecular weight (M_{w}) to the number average molecular weight (Mₙ) is at least 1.5,
   (c) the main chain is an oxyalkylene polymer which is obtainable by ring-opening polymerization of a cyclic ether using an active hydrogen atom-containing compound as an initiator and which is composed solely of structures based on the initiator and the cyclic ether, and
   (d) it is a hydroxyl group terminal oxyalkylene polymer which is obtainable by ring-opening polymerization of a cyclic ether using an active hydrogen atom-containing compound as an initiator and which is composed solely of structures based on the initiator and the cyclic ether.

### Hydroxy group terminal oxyalkylene polymer (B1)

The polymer (B1) is one satisfying (a), (b) and (d), among polymers (B). The polymer (B1) is preferably one of, or a mixture of two or more of, hydroxyl group terminal oxyalkylene polymers which are obtainable by ring-opening polymerization of a cyclic ether using an active hydrogen atom-containing compound as an initiator, in the presence of a catalyst.

As the catalyst for ring opening polymerization of the cyclic ether, a double metal cyanide complex catalyst is particularly preferred. Particularly, a method for polymerization may be mentioned wherein in the presence of the above-mentioned initiator and the double metal cyanide complex catalyst, the cyclic ether is supplied continuously or dividedly in a necessary number of times. Further, it is particularly preferred to employ the following polymerization conditions (iv) to (vii) to adjust the value of M_{w}/Mₙ.
(iv) A method wherein the polymerization temperature is adjusted to be at most 100°C.
(v) A method wherein tert-butyl alcohol is used as at least one of organic ligands of the catalyst.
(vi) A method wherein the initiator, the catalyst and the cyclic ether are continuously supplied and retained under the reaction conditions for a certain prescribed period of time, and the product is continuously withdrawn (continuous method).
(vii) A method wherein a predetermined amount of the cyclic ether is supplied in the presence of the initiator and the catalyst to obtain an oxyalkylene polymer having a certain prescribed Mₙ, whereupon (p) the initiator and a certain prescribed amount of the cyclic ether are further supplied and the polymerization is continued until the cyclic ether is consumed, and thereafter, the operation of (p) is repeated a few times.

Further, as another method for obtaining the polymer (B1), it can be obtained also by mixing several kinds of hydroxyl group terminal oxyalkylene polymers having a M_{c} of at least 5,000 and a M_{w}/Mₙ ratio of less than 1.5.

Further, it can be obtained also by mixing polymers (B) having different Mₙ or M_{w}/Mₙ, such as mixing ones having relatively large M_{w}/Mₙ obtained by the above-mentioned methods (iv) to (vii), or mixing one having a relatively large M_{w}/Mₙ and one having a M_{w}/Mₙ of less than 1.5, among polymers (B).

With the polymer (B1), M_{w}/Mₙ is at least 1.5, preferably at least 1.6, and it is preferably at most 2.0, more preferably at most 1.8.

Further, M_{c} is at least 5,000. It is preferably at most 15,000, more preferably at most 10,000, particularly preferably at most 7,500. Further, Mₙ is preferably at least 7,500, more preferably at least 10,000, particularly preferably at least 15,000, and it is preferably at most 30,000, more preferably at most 22,000. M_{c} is one obtained by dividing Mₙ by the number f of terminal groups (i.e. equal to the total number of terminal hydroxyl groups and terminal initiator residues per molecule).

By converting the terminal hydroxyl group of the polymer (B1) to a group of the formula 1 by the above-described method, the polymer (A1) can be obtained. M_{w}/Mₙ of the polymer (A1) is substantially equal to M_{w}/Mₙ of the polymer (B1) prior to the conversion of the terminal group. Mₙ slightly increases in correspondence with the conversion of the terminal group.

### Oxyalkylene polymer (C1)

The oxyalkylene polymer (C1) is preferably one of, or a mixture of two or more of, polymers which are obtainable by converting terminal hydroxyl groups of hydroxyl group terminal oxyalkylene polymers obtainable by ring-opening polymerization of a cyclic ether using an active hydrogen atom-containing compound as an initiator, in the presence of a catalyst, to groups of the formula 2.

The oxyalkylene polymer (C1) can be produced by converting the terminal hydroxyl group of the oxyalkylene polymer (B1) to a group of the formula 2.

Further, it can be produced also by mixing polymers (C) having different Mₙ or M_{w}/Mₙ, such as mixing ones having M_{w}/Mₙ of less than 1.5, one another, or mixing one having M_{w}/Mₙ of less than 1.5 and one having M_{w}/Mₙ of at least 1.5, among polymers (C).

By converting the group of the formula 2 in the polymer (C1) to the group of the formula 1 by the above-described method, the polymer (A1) can be obtained. M_{w}/Mₙ of the polymer (A1) is a substantially equal to M_{w}/Mₙ of the polymer (C1) prior to the conversion of the terminal group. Mₙ slightly increases in correspondence with the conversion of the terminal group.

### Additives

The present invention provides a curable composition comprising the above-described oxyalkylene polymer (A1) and a curing accelerator. To the curable composition, additives may further be incorporated. Now, the curing accelerator and other additives will be described.

### Curing accelerator

In the present invention, a curing accelerator is used. Specifically, the following compounds may be mentioned.

A bivalent tin compound such as tin (II) 2-ethylhexanoate, tin (II) naphthenate or tin (II) stearate. A tetravalent tin compound such as an organic tin carboxylate such as a dialkyltin dicarboxylate or a dialkoxytin monocarboxylate, such as dibutyltin dilaurate, dibutyltin diacetate, dibutyltin monoacetate or dibutyltin maleate, a tin chelate compound such as dibutyltin bisacetyl acetonate, dibutyltin bisethylacetoacetate or dibutyltin monoacetyl acetonate monoalkoxide, a reaction product of a dialkyltin oxide with an ester compound, and a reaction product obtained by reacting such a reaction product further with an alkoxysilane compound, a reaction product of a dialkyltin oxide with an alkoxysilane compound, dialkyltin dialkylsulfide.

The above ester compound may, for example, be a phthalate such as bis-2-ethylhexyl phthalate or diisononyl phthalate, other aliphatic or aromatic carboxylic acid ester, tetraethyl silicate or its partially hydrolyzed condensate.

A bivalent bismuth compound such as an organic carboxylic acid bismuth salt. An aliphatic monoamine such as butylamine, hexylamine, octylamine, decylamine, laurylamine or N,N-dimethyloctylamine, or an aliphatic polyamine compound such as ethylenediamine, hexamethylenediamine, diethylenetriamine, triethylenetetramine or tetraethylenepentamine. An amine compound such as an aromatic amine compound, an alkanolamine, or an aminosilane coupling agent such as N-(2-aminoethyl)-3-aminopropyltrimethoxysilane or 3-aminopropyltrimethoxysilane, or a salt of such an amine compound with e.g. a carboxylic acid.

An acid such as phosphoric acid or a C₁₋₂₀ organic carboxylic acid such as acetic acid, propionic acid, 2-ethylhexanoic acid, stearic acid, adipic acid, oxalic acid, citric acid, acrylic acid, methacrylic acid or benzoic acid.

Such curing accelerators may be used alone or in combination as a mixture of two or more of them. For example, a bivalent tin compound or a bivalent bismuth compound will have the curing accelerating effects improved by a combination with an amine and/or an acid, and is preferably used in combination, particularly preferably in combination with a primary amine. Further, a combined use of a bivalent tin compound or a bivalent bismuth compound with a tetravalent tin compound, is preferred, whereby a composition having the stress relaxation and the low temperature curability well balanced, will be obtained.

The curing accelerator is used preferably in an amount of from 0.01 to 10 parts by mass per 100 parts by mass of the polymer (A1).

### Other additives

The curable composition of the present invention may contain the following additives.

### Filler

One or more of known fillers may be used in an amount of from 1 to 1,000 parts by mass, particularly from 50 to 250 parts by mass, per 100 parts by mass of the polymer (A1). The following may, for example, be mentioned.

Calcium carbonates, such as heavy calcium carbonate having an average particle size of from 1 to 20 µm, light calcium carbonate having an average particle size of from 1 to 3 µm, produced by a precipitation method, and colloidal calcium carbonate surface-treated with a fatty acid or a resin acid type organic substance. Various silica fine powders, carbon black, magnesium carbonate, diatomaceous earth, clay, talc, titanium oxide, bentonite, ferric oxide, and zinc oxide. Inorganic micro balloons, such as shirasu-balloons, glass balloons, silica balloons, fly ash balloons, alumina balloons, zirconia balloons or carbon balloons. Organic resin micro balloons, such as phenolic resin balloons, epoxy resin balloons, urea resin balloons, polyvinylidene chloride resin balloons, polystyrene resin balloons, poly(meth)acrylic resin balloons, polyvinyl chloride balloons, polystyrene-polyacrylic acid balloons, polyacrylonitrile balloons and Saran balloon. Resin beads. Powdery fillers such as wood powder, pulp, mica, walnut shell powder, rice husk powder, graphite, aluminum fine powder, and flint powder. Fibrous fillers such as glass fibers, carbon fibers, Kevlar fibers and polyethylene fibers.

Among them, calcium carbonate is preferred, and particularly preferred is a combined use of heavy calcium carbonate and colloidal calcium carbonate. Further, micro balloon are preferred, since the composition and its cured product can be made light in weight, as the specific gravity is low, and since the operation efficiency can be improved such that the stringiness of the composition is improved. The micro balloon may be used alone, but they are particularly preferably used in combination with other fillers such as calcium carbonate.

### Plasticizer

One or more of known plasticizers may be used in an amount of from 1 to 1,000 parts by mass per 100 parts by mass of the polymer (A1). The following may, for example, be mentioned.

Phthalates such as bis(2-ethylhexyl)phthalate and dibutyl phthalate. Aliphatic carboxylates such as bis(2-ethylhexyl) adipates and butyl oleate. Alcohol esters such as pentaerythritol ester. Phosphoric acid esters. Epoxy plasticizers such as epoxidized soybean oil, 4,5-epoxycyclohexane-1, bis(2-ethylhexyl) 2-dicarboxylate and benzyl epoxystearate. Chlorinated paraffin. Polymer plasticizers, such as polyester polyol, polyoxyalkylene polyol or its terminal modified product (such as a terminal alkyloxy-modified product), oligomers of polystyrene, such as poly-α-methylstyrene and polystyrene, and oligomers such as polybutadiene, butadiene/acrylonitrile copolymer, polychloroprene, polyisoprene, polybutene, hydrogenated polybutene, an epoxidized polybutadiene, and a poly(meth)acrylic resin.

In an application to an adhesive or in an application to coat the surface of a cured product with a coating material, a method of using a polymer plasticizer or no plasticizer, is preferred, since it is thereby possible to obtain effects such as reduction of pollution on the surface of the cured product or in the vicinity thereof, improvement of the drying property of the coating material, reduction of staining of the coating material surface, etc. Further, with a polymer plasticizer, improvement of the weather resistance can be accomplished at a high level, and it is preferably used in other applications.

Further, when the epoxidized plasticizer is used in combination with a bivalent tin compound and a primary amine as a curing accelerator, there will be an effect such that a cured product having a good compressive elastic recovery can be obtained.

### Solvent

For the purpose of adjusting the viscosity and improving the storage stability of the composition, one or more of known solvents may be used in an amount of from 0.1 to 500 parts by mass per 100 parts by mass of the polymer (A1). The following may, for example, be mentioned.

Alcohols such as methanol, ethanol, isopropyl alcohol, isopentyl alcohol and hexanol, aliphatic hydrocarbons, aromatic hydrocarbons, halogenated hydrocarbons, ketones, esters and ethers. Alcohols have effects for improving the storage stability of the composition of the present invention and thus are preferred, for example, in a case where the composition is stored for a long period of time.

### Adhesion-promoting agent

Further, for the purpose of improving the adhesiveness, an adhesion-promoting agent may be used. When an adhesion-promoting agent is to be used, such adhesion-promoting agents may, for example, be silane coupling agents such as amino group-containing silanes, epoxy group-containing silanes, (meth)acryloyloxy group-containing silanes, mercapto group-containing silanes and carboxyl group-containing silanes.

Further, reaction products of amino group-containing silanes with epoxy group-containing silanes, reaction products of amino group-containing silanes with (meth)acryloyloxy group-containing silanes, reaction products of epoxy group-containing silanes with mercapto group-containing silanes, and reaction products of mercapto group-containing silanes with one another, may also be used.

The above-mentioned compounds may be used alone or in combination as a mixture of two or more of them. The amount is preferably from 0.01 to 30 parts by mass per 100 parts by mass of the polymer (A1).

Amino group-containing silanes may, for example, be 3-aminopropyl trimethoxysilane, 3-aminopropyl triethoxysilane, 3-aminopropyl methyldimethoxysilane, N-(2-aminoethyl)-3-aminopropyl trimethoxysilane, N-(2-aminoethyl)-3-aminopropyl methyldimethoxysilane, N-(2-aminoethyl)-3-aminopropyl triethoxysilane, 3-ureidopropyl triethoxysilane, N-(N-vinylbenzyl-2-aminoethyl)-3-aminopropyl trimethoxysilane, and 3-anilinopropyl trimethoxysilane.

Epoxy group-containing silanes may, for example, be 3-glycidyloxypropyl trimethoxysilane, 3-glycidyloxypropyl methyldimethoxysilane, and 3-glycidyloxypropyl triethoxysilane.

As an adhesion-promoting agent, an epoxy resin and, if necessary, an epoxy resin curing agent, may be used. Especially in an application to an adhesive, it is preferred to use an epoxy resin, whereby a composition having a high strength will be given. As the epoxy resin to be incorporated to the composition of the present invention, a common epoxy resin may be mentioned. Specifically, the following may, for example, be mentioned. The amount of the epoxy resin is preferably from 0.1 to 100 parts by mass per 100 parts by mass of the polymer (A1).

Glycidyl ether type epoxy resins such as a bisphenol A type epoxy resin, a bisphenol F type epoxy resin, a tetrabromobisphenol A type epoxy resin, a novolak bisphenol A type epoxy resin and a hydrogenated bisphenol A type epoxy resin, glycidyl ester type epoxy resins such as glycidyl 4-glycidyloxybenzoate, diglycidyl phthalate, diglycidyl tetrahydrophthalate, and diglycidyl hexahydrophthalate, and commonly epoxy resins and epoxy group-containing vinyl type polymers, such as a m-aminophenolic type epoxy resin, a diaminodiphenylmethane type epoxy resin, a urethane-modified epoxy resin, various alicyclic epoxy resins, N,N-diglycidylaniline, N,N-diglycidyl-o-toluidine, triglycidyl isocyanurate, polyoxyalkylene glycol diglycidyl ether, a glycidyl ether of a polyhydric alcohol such as glycerol, a hydantoin type epoxy resin and an epoxidized compound of an unsaturated polymer such as a petroleum resin.

Further, a curing agent for the above epoxy resins may be used in combination. Specifically, the following may, for example, be mentioned. When a curing agent for an epoxy resin is used, the amount of such a curing agent is preferably from 0.1 to 300 parts by mass per 100 parts by mass of the epoxy resin.

Amines such as triethylene tetramine, tetraethylene pentamine, N-aminoethylpiperazine, m-xylidenediamine, m-phenylenediamine, diaminodiphenylmethane, diaminodiphenylsulfone, isophoronediamine and 2,4,6-tris(dimethylaminomethyl)phenol, their salts, blocked amines such as a ketimine compound, polyamide resins, imidazoles, dicyan diamides, boron trifluoride complex compounds, carboxylic anhydrides such as phthalic anhydride, hexahydrophthalic anhydride, tetrahydrophthalic anhydride, dodecenyl succinic anhydride and pyromellitic anhydride, phenoxy resins, carboxylic acids, alcohols, terminal functional group-containing liquid polymers such as a terminal amino-modified product of polyoxypropylene polyol, a terminal carbonyl-modified product of polyoxypropylene polyol, a polybutadiene having a terminal modified with e.g. a hydroxyl group, a carboxyl group or an amino group, hydrogenated polybutadiene, an acrylonitrile/butadiene copolymer and an acrylic polymer.

### Dehydrating agent

A known dehydrating agent may be used in an amount of from 0.1 to 30 parts by mass per 100 parts by mass of the polymer (A1). The following dehydrating agents may, for example, be mentioned.

Alkyl orthoformates such as methyl orthoformate and ethyl orthoformate, alkyl orthoacetates such as methyl orthoacetate and ethyl orthoacetate, hydrolyzable organic silicon compounds such as methyl trimethoxysilane, vinyl trimethoxysilane, tetramethoxysilane and tetraethoxysilane, and hydrolyzable organic titanium compounds.

Vinyl trimethoxysilane or tetraethoxysilane is particularly preferred from the viewpoint of the cost and effects. Such a dehydrating agent is particularly effective for a one-pack type formulation.

### Antiaging agent

As an antiaging agent, a known antioxidant, ultraviolet absorber or light stabilizer may be employed. Compounds of hindered amine type, benzotriazole type, benzophenone type, benzoate type, cyano acrylate type, acrylate type, hindered phenol type, phosphorus type and sulfur type may be used. It is particularly preferred to use two or all of a light stabilizer, an antioxidant and an ultraviolet absorber in combination, whereby the respective characteristics can effectively be used to improve the effects as a whole. Specifically, a combination of a tertiary or secondary hindered amine type light stabilizer, a benzotriazole type ultraviolet absorber and a hindered phenol type or phosphite type antioxidant, is particularly effective.

The amount of each of the antioxidant, the ultraviolet absorber and the light stabilizer, is preferably within a range of from 0.1 to 10 parts by mass per 100 parts by mass of the polymer (A1).

### Thixotropic agent

A known thixotropic agent may be used in an amount of from 0.1 to 10 parts by mass per 100 parts by mass of the polymer (A1). Hydrogenated castor oil, fatty acid amide, calcium stearate, zinc stearate, silica fine powder or an organic acid-treated calcium carbonate may, for example, be mentioned.

### Surface improvers

For the purpose of improving the weather resistance or resistance against deposition of dust for a long period of time, an atmospheric oxidation curable compound or a photocurable compound may be used. These compounds may be used alone, but preferably used in combination.

The atmospheric air oxidation curable compound may preferably be used in an amount of from 0.1 to 50 parts by mass per 100 parts by mass of the polymer (A1), and the photocurable compound may preferably be used in an amount of from 0.1 to 50 parts by mass per 100 parts by mass of the polymer (A1).

The air oxidation curable compound may, for example, a dry oil such as tung oil, various alkyd resins obtained by modifying such compounds, an acrylic polymer modified by a dry oil, a silicone resin, a polybutadiene, a diene polymer such as polymer or copolymer of a C₅₋₈ diene, and various modified products (such as boiled oil modified products) of such a polymer or copolymer, or an atmospheric air curable polyester compound.

As the photocurable compound, a polyfunctional acrylate is usually employed. The atmospheric air oxidation curable compound and the photocurable compound may simultaneously be used in combination, or one of them may be used alone.

Further, for the purpose of adjusting the physical properties of the cured product and reducing stickiness of the surface, a compound capable of forming trimethylsilanol by hydrolysis can be used. As the compound capable of forming trimethylsilanol, a trimethylsilyl ether of a hydroxyl compound such as an aliphatic alcohol, an aromatic alcohol or phenol, can usually be employed. By changing the type of the alcohol optionally, it is possible to adjust the curability. For such a purpose, trimethylsilyl ethers of a plurality of alcohols may be used simultaneously.

The amount of the compound capable of forming trimethylsilanol is preferably from 0.1 to 10 parts by mass per 100 parts by mass of the polymer (A1).

It is particularly effective for reducing the modulus and reducing the stickiness of the surface of a cured product especially in the case where a bivalent tin compound and a primary amine are used as curing accelerators.

Further, as a pigment, an inorganic pigment such as iron oxide, chromium oxide or titanium oxide, and an organic pigment such as phthalocyanine blue or phthalocyanine green, can be used. Use of a pigment is effective not only for coloring but also for the purpose of improving weather resistance.

Further, for the purpose of providing an ornamental characteristic, fine fragments having a color different from the color of the composition may be added to the composition, so that a cured product having a surface appearance like granite or granite stone, may be obtained.

Further, a known flame retardant or mildew proofing agent, or a delustering agent to be used for a coating material, may be employed.

### Combined use of other resins

Furthermore, the curable composition of the present invention may further contain a polymer wherein the main chain is a polyester, a polycarbonate, a poly(meth)acrylate or a polyolefin and which contains at least one unsaturated bond or reactive silicon group in its molecule.

In a case where a polymer wherein the main chain is a polyester or a polycarbonate, is contained, the adhesion to the substrate will be improved. In a case where a polymer wherein the main chain is a poly(meth)acrylate, is contained, the adhesion with the substrate and the weather resistance will be improved. In a case where a polymer wherein the main chain is a polyolefin, is contained, the water resistance will be improved. A plurality of them may be combined for use.

The curable composition in the present invention can be cured by moisture. The curing temperature is preferably within a range of from 0 to 35°C, more preferably from 20 to 25°C. The curable composition in the present invention can be used suitably for a sealing material, a waterproofing agent, an adhesive such as an elastic adhesive, or a coating material.

Now, the present invention will be described in further detail with reference to Examples and Comparative Examples. However, it should be understood that the present invention is by no means restricted to such specific Examples. Further, Mₙ and M_{w}/Mₙ of the hydroxyl group terminal oxyalkylene polymer were obtained by GPC as mentioned above. The viscosity of the polymer was measured at 25°C by a method disclosed in JIS K1557.

### Preparation of double metal cyanide complex catalyst

In Examples 1 and 2, as an aqueous zinc chloride solution, one having 10 g of zinc chloride dissolved in 15 ml of water, was used. As an aqueous potassium hexacyano cobaltate solution, one having 4 g of potassium hexacyano cobaltate dissolved in 80 ml of water, was used.

### EXAMPLE 1

To the aqueous zinc chloride solution, the aqueous potassium hexacyano cobaltate solution was dropwise added over a period of 30 minutes at 40°C. After the dropwise addition, 8 ml of ethylene glycol mono-tert-butyl ether (hereinafter referred to as ETB), 72 ml of tert-butyl alcohol (hereinafter referred to as TBA) and 80 ml of water were added, followed by stirring at 60°C for 1 hour for aging. After the aging, the complex was collected by filtration.

To the obtained complex, 4 ml of ETB, 36 ml of TEA and 80 ml of water were added, followed by stirring for 30 minutes and then followed by washing and filtration. Further, 10 ml of ETB and 90 ml of TBA were added, followed by stirring for 30 minutes, and then a polyoxypropylene triol having a molecular weight of 1,000 was added, followed by stirring for 30 minutes. Then, the solvent was removed at 120°C to obtain a double metal cyanide complex catalyst (catalyst A) dispersion having a concentration of 7 mass% as dispersed in a polyol.

### EXAMPLE 2

Into the aqueous zinc chloride solution, the aqueous potassium hexacyano cobaltate solution was dropwise added over a period of 30 minutes at 40°C. After completion of the dropwise addition, 80 ml of glyme and 80 ml water were added, followed by stirring at 60°C for 1 hour. Then, the complex was collected by filtration. To the obtained complex, 80 ml of glyme and 80 ml of water were added, followed by stirring for 30 minutes and then by filtration. Further, 100 ml of glyme and 10 ml of water were added thereto, followed by stirring and then by filtration. After drying at 80°C for 4 hours, the product was pulverized to obtain a double metal cyanide complex catalyst (catalyst B).

### Preparation of an oxyalkylene polymer

### EXAMPLE 3

Using 2,340 g of a polyoxypropylene triol (hereinafter referred to as triol A) having a Mₙ of 5,000, obtained by reacting glycerol with propylene oxide (hereinafter referred to as PO), as a initiator, 5,660 g of PO was reacted in the presence of 11.4 g of the catalyst A dispersion at 90°C to obtain a polyoxypropylene triol having a Mₙ of 16,000, a M_{w}/Mₙ ratio of 1.81 and a viscosity of 23.8 Pa·s.

1,000 g of this polyoxypropylene triol was put into a pressure container, and further, a 28% methanol solution of sodium methoxide was added so that sodium would be 1.05 mol per 1 mol of the hydroxyl group, followed by stirring at 120°C for 30 minutes. After the stirring, a methanol removal reaction was carried out under reduced pressure, and then 16 g of allyl chloride was added and reacted for 1 hour. Under reduced pressure, an unreacted volatile component was distilled off, and inorganic salts, etc. as byproducts were removed for purification to obtain an allyl group terminal oxypropylene polymer. From the quantitative analysis of unsaturated bonds, it has been confirmed that 95% of hydroxyl groups were converted to allyloxy groups.

To 500 g of the obtained polymer, 50 µl of a xylene solution (containing 3 mass% of platinum) of a 1,3-divinyl-1,1,3,3-tetramethyldisiloxane platinum complex, was added and uniformly stirred. Then, 8.8 g of dimethoxymethylsilane was added and reacted at 70°C for 5 hours, to obtain a dimethoxymethylsilyl group terminal oxypropylene polymer (P-1) having a faint yellow color and a viscosity of 24.3 Pa·s.

### EXAMPLE 4

Using, as initiators, 700 g of a polyoxypropylene diol having Mₙ=3,000 (hereinafter referred to as diol B) obtained by reacting dipropylene glycol with PO and 1,170 g of triol A, 6,130 g of PO was reacted at 90°C in the presence of 1.0 g of catalyst B to obtain a polyoxypropylene polyol having a Mₙ of 16,000, a M_{w}/Mₙ ratio of 1.67 and a viscosity of 21.6 Pa·s.

Using 1,000 g of this polyoxypropylene polyol and 13 g of allyl chloride, an allyl group terminal oxypropylene polymer having 95% of hydroxyl groups converted to allyloxy groups, was obtained in the same manner as in Example 3. Using 7.3 g of dimethoxymethylsilane to 500 g of the obtained polymer, a dimethoxymethylsilyl group terminal oxypropylene polymer (P-2) having a faint yellow color and a viscosity of 22.3 Pa·s, was obtained in the same manner as in Example 3.

### EXAMPLE 5

Using, as initiators, 120 g of diol B and 200 g of triol A, 2,480 g of PO was reacted at 120°C in the presence of 1.2 g of catalyst B, until the pressure no longer decreased. Then, 120 g of diol B and 200 g of triol A were added, and 1,680 g of PO was reacted until the pressure no longer decreased. Then, 120 g of diol B and 200 g of triol A were added, and 1,280 g of PO was further reacted until the pressure no longer decreased. Then, 80 g of diol B and 130 g of triol A were added, and 590 g of PO was reacted until the pressure no longer decreased. Then, 60 g of diol B and 100 g of triol A were added, and 240 g of PO was reacted until the pressure no longer decreased. Finally, 75 g of diol B and 125 g of triol A were added, and 200 g of PO was reacted. A polyoxypropylene polyol having a Mₙ of 16,000, a M_{w}/Mₙ ratio of 1.79 and a viscosity of 23.6 Pa·s, was obtained.

Using 1,000 g of this polyoxypropylene polyol and 13 g of allyl chloride, an allyl group terminal oxypropylene polymer having 95% of hydroxyl groups converted to allyloxy groups, was obtained in the same manner as in Example 3. Using 7.3 g of dimethoxymethylsilane to 500 g of the obtained polymer, a dimethoxymethylsilyl group terminal oxypropylene polymer (P-3) having a faint yellow color and a viscosity of 24.2 Pa·s, was obtained in the same manner as in Example 3.

### EXAMPLE 6

Using triol A as an initiator, PO was reacted at 120°C in the presence of catalyst B to obtain the following polyoxypropylene triols Q-1 to Q-5 having different Mₙ.
- Q-1:: Mₙ=24,000, M_{w}/Mₙ=1.41, viscosity 44.8 Pa·s.
- Q-2:: Mₙ=20,000, M_{w}/Mₙ=1.37, viscosity 22.4 Pa·s.
- Q-3:: Mₙ=16,000, M_{w}/Mₙ=1.25, viscosity 11.3 Pa·s.
- Q-4:: Mₙ=12,000, M_{w}/Mₙ=1.21, viscosity 4.2 Pa·s.
- Q-5:: Mₙ=8,000, M_{w}/Mₙ=1.13, viscosity 1.6 Pa·s.

The above Q-1 to Q-5 were mixed in a mass ratio of Q-1/Q-2/Q-3/Q-4/Q-5=1,880/730/520/310/60 to obtain a polyoxyalkylene triol having a Mₙ of 17,000, a M_{w}/Mₙ ratio of 1.74 and a viscosity of 23.5 Pa·s,

Using 1,000 g of this polyoxypropylene triol and 15 of allyl chloride, the reaction was carried out in the same manner as in Example 3 to obtain an allyl group terminal oxypropylene polymer having 95% of hydroxyl groups converted to allyloxy groups. Using 8.3 g of dimethoxymethylsilane to 500 g of the obtained polymer, a dimethoxymethylsilyl group terminal oxypropylene polymer (P-4) having a faint yellow color and a viscosity of 24.0 Pa·s was obtained in the same manner as in Example 3.

### EXAMPLE 7

Using the polyoxyalkylene triol Q-3 obtained in Example 6, an oxypropylene polymer having 95% of hydroxyl groups converted to allyloxy groups, was obtained in the same manner as in Example 3, which was further reacted with dimethoxymethylsilane in the same manner as in Example 3 to obtain a dimethoxymethylsilyl group terminal oxypropylene polymer (P-5) having a faint yellow color and a viscosity of 12.5 Pa·s.

### EXAMPLE 8

The polyoxypropylene diol having a Mₙ of 3,000, obtained by using dipropylene glycol as an initiator and a potassium hydroxide catalyst, and the polyoxypropylene triol having a Mₙ of 3,000, obtained by using glycerol as an initiator and a potassium hydroxide catalyst, were mixed in a mass ratio of 84/16 to obtain a mixed polyoxypropylene polyol, to which sodium hydroxide was added and reacted under heating and stirring, and then, reacted with bromochloromethane. A polyoxypropylene polyol having a Mₙ of 18,000, a M_{w}/Mₙ of 2.10 and a viscosity of 36.0 Pa·s, was obtained.

Using this polyoxypropylene polyol, an oxypropylene polymer having 95% of hydroxyl groups converted to allyloxy groups, was obtained in the same manner as in Example 3, and further reacted with dimethoxymethylsilane in the same manner as in Example 3, to obtain a dimethoxymethylsilyl group terminal oxypropylene polymer (P-6) having a faint yellow color and a viscosity of 38.0 Pa·s.

With respect to Examples 3 to 8, the catalysts used for the preparation of the hydroxyl group terminal polymers, as well as the names, Mₙ, M_{w}/Mₙ and the viscosities of the finally obtained polymers, are shown in Table 1.

### EXAMPLES 9 to 16

As shown in Table 2, 100 parts by mass of a polymer, fillers, additives and a curing accelerator were mixed at room temperature to obtain a curable composition. Using an aluminum plate as a substrate, a tensile test by a H-model test specimen was carried out in accordance with the test method for a building sealant as prescribed in JIS A-1439, whereby the physical properties and the failure made were measured. The failure made was represented by the ratio of the area of cohesive failure (cohesive failure ratio) after the tensile test. Further, in order to investigate the curability of the surface, the above curable composition was cured for 3 days at 23°C under a humidity of 65%, and then a cured portion was peeled from the surface, and the thickness of the cured portion was measured (the cured thickness after three days). The results are shown in Table 2.

In the Table, Examples 9 to 14 are Examples of the present invention, and Examples 15 and 16 are Comparative Examples.

### EXAMPLES 17 to 23

As show in Table 3, 100 parts by mass of a polymer, and fillers and additives as identified under "component A", were mixed to obtain component A. Then, additives and curing accelerators as identified under "component B" were mixed to obtain component B. Components A and B were mixed to obtain a curable composition, and using an aluminum plate as a substrate, a tensile test by a H-model test specimen was carried out in accordance with the test method for a building sealant as prescribed in JIS A-1439, whereby the physical properties and the failure made were measured. In the preparation of a test specimen, the substrate was preliminarily coated with a commercially available silane type primer, followed by drying. Further, for the purpose of examining the curability of the inner section of sealant, the curable composition was put into a cup having a diameter of 3 cm and a depth of 4 cm and cured at 23°C under a humidity of 65% for 7 days, whereby the elastic hardness was measured after 1 day and after 7 days, and the ratio was obtained. The elastic hardness was measured by means of DD2-C2 model hardness meter, manufactured by Kobunshi Keiki K.K. (elastic hardness ratio of after 1 day/after 7 days). The results are shown in Table 3. In the Table, Examples 17 to 21 are Examples of the present invention, and Examples 22 and 23 are Comparative Examples.

Further, the details of the compounds 1) to 16) in Tables 2 and 3, are as follows.
1) Neolight SP-T, manufactured by Takehara Kagaku Kogyo K.K.
2) Whiton SB, manufactured by Shiraishi Calcium Kogyo K.K.
3) A polyoxxpropylene diol having a Mₙ of 3,000 and a M_{w}/Mₙ ratio of 1.3.
4) TINUVIN 327, manufactured by Ciba Specialty Chemicals Co., Ltd.
5) Irganox 1010, manufactured by Ciba Specialty Chemicals Co., Ltd.
6) Adekastab LA62, manufactured by Asahi Denka Kogyo K.K.
7) Adekastab LA67, manufactured by Asahi Denka Kogyo K.K.
8) N-2-(aminoethyl)-3-aminopropyl trimethoxysilane
9) 3-Glycidyloxypropyl trimethoxysilane
10) Reaction product of dibutyltin oxide with DOP, manufactured by Sankyo Organic Chem. Co., Ltd.
11) Dibutyltin bisacetyl acetonate, manufactured by Nitto Kasei Kogyo K.K.
12) Bis-2-ethylhexyl 3,4-epoxycyclohexane-1,2-dicarboxylate
13) 2-Ethylhexyloxytrimethylsilane
14) Trimethylolpropane tris(trimethylsilyl)ether
15) Trimethylolpropane triacrylate, manufactured by Toa Gosei K.K.
16) Epikote 828, manufactured by Japan Epoxy Resins Co., Ltd.
17) Disparlon #6500, amide type wax, manufactured by Kusumoto Chemicals, Ltd.
18) Disparlon #305, hydrogenated castor oil, manufactured by Kusumoto Chemicals, Ltd.

**Table 1**

| Example | Catalyst | Name | Mₙ | M_{w}/Mₙ | Viscosity |
|---|---|---|---|---|---|
| 3 | A | P-1 | 16,000 | 1.81 | 24.3 |
| 4 | B | P-2 | 16,000 | 1.67 | 22.3 |
| 5 | B | P-3 | 16,000 | 1.79 | 24.2 |
| 6 | B | P-4 | 17,000 | 1.74 | 24.0 |
| 7 | B | P-5 | 16,000 | 1.25 | 12.5 |
| 8 | KOH | P-6 | 18,000 | 2.10 | 38.0 |

**Table 2**

| Example | 9 | 10 | 11 | 12 | 13 | 14 | 15 | 16 |
|---|---|---|---|---|---|---|---|---|
| Polymer | P-1 | P-1 | P-1 | P-2 | P-3 | P-4 | P-5 | P-6 |
| Filler | | | | | | | | |
| Colloidal calcium carbonate 1) | 110 | 110 | 110 | 110 | 110 | 110 | 110 | 110 |
| Calcium carbonate heavy 2) | 30 | 30 | 30 | 30 | 30 | 30 | 30 | 30 |
| Titanium oxide | 10 | 10 | 10 | 10 | 10 | 10 | 10 | 10 |

| Additives | | | | | | | | |
|---|---|---|---|---|---|---|---|---|
| DOP | 50 | 50 | | 50 | 50 | 50 | 50 | 50 |
| Polyether plasticizer 3) | | | 50 | | | | | |
| Ultraviolet absorber 4) | 1 | 1 | 1 | 1 | 1 | 1 | 1 | 1 |
| Antioxidant 5) | 1 | 1 | 1 | 1 | 1 | 1 | 1 | 1 |
| Light stabilizer LA62 6) | 1 | 1 | | 1 | 1 | 1 | 1 | 1 |
| Light stabilizer Light stabilizer LA67 7) | | | 1 | | | | | |
| Aminosilane 8) | 0.5 | 0.5 | 0.5 | 0.5 | 0.5 | 0.5 | 0.5 | 0.5 |
| Epoxysilane 9) | 0.3 | 0.3 | 0.3 | 0.3 | 0.3 | 0.3 | 0.3 | 0.3 |
| Vinyl trimethoxysilane | 1 | 1 | 1 | 1 | 1 | 1 | 1 | 1 |
| Thixotropic agent 3 6500 17) | 3 | 3 | 3 | 3 | 3 | 3 | 3 | 3 |

| Curing accelerator | | | | | | | | |
|---|---|---|---|---|---|---|---|---|
| No. 918 10) | 3 | | 3 | 3 | 3 | 3 | 3 | 3 |
| U-220 11) | | 3 | | | | | | |

| Physical properties | | | | | | | | |
|---|---|---|---|---|---|---|---|---|
| 50% Modulus (N/cm²) | 26 | 21 | 28 | 24 | 26 | 25 | 27 | 26 |
| Tensile strength at break (N/cm²) | 72 | 68 | 75 | 75 | 71 | 70 | 79 | 59 |
| Elongation at break (%) | 420 | 480 | 410 | 400 | 420 | 420 | 520 | 330 |
| Cohesive failure ratio (%) | 100 | 100 | 100 | 100 | 100 | 100 | 30 | 100 |
| Cured thickness after 3 days (cm) | 0.5 0.5 | 1.0 1.0 | 0.5 0.5 | 0.5 0.5 | 0.5 0.5 | 0.5 0.5 | 0.5 0.5 | 0.3 0.3 |

**Table 3**

| Example | 17 | 18 | 19 | 20 | 21 | 22 | 23 |
|---|---|---|---|---|---|---|---|
| Component A | | | | | | | |
| Polymer | P-1 | P-1 | P-2 | P-3 | P-4 | P-5 | P-6 |

| Filler | | | | | | | |
|---|---|---|---|---|---|---|---|
| Colloidal calcium carbonate 1) | 120 | 120 | 120 | 120 | 120 | 120 | 120 |
| Calcium carbonate heavy 2) | 20 | 20 | 20 | 20 | 20 | 20 | 20 |
| Titanium oxide | 10 | 10 | 10 | 10 | 10 | 10 | 10 |

| Additives | | | | | | | |
|---|---|---|---|---|---|---|---|
| DOP | 30 | | 30 | 30 | 30 | 30 | 30 |
| Polyether plasticizer 3) | | 30 | | | | | |
| Aliphatic epoxy plasticizer 12) | 20 | 20 | 20 | 20 | 20 | 20 | 20 |
| Monosilanol compound A 13) | 1.5 | | 1.5 | 1.5 | 1.5 | 1.5 | 1.5 |
| Monosilanol compound B 14) | | 0.7 | | | | | |
| Tung oil | 5 | 5 | 5 | 5 | 5 | 5 | 5 |
| Aronix M309 15) | 5 | 5 | 5 | 5 | 5 | 5 | 5 |
| Ultraviolet absorber 4) | 1 | 1 | 1 | 1 | 1 | 1 | 1 |
| Antioxidant 5) | 1 | 1 | 1 | 1 | 1 | 1 | 1 1 |
| Light stabilizer LA62 6) | 1 | 1 | 1 | 1 | 1 | 1 | 1 |
| Epoxy resin 16) | 5 | 5 | 5 | 5 | 5 | 5 | 5 |
| Glass balloons | 1 | 1 | 1 | 1 | 1 | 1 | 1 |
| Thixotropic agent 305 18) | 3 | 3 | 3 | 3 | 3 | 3 | 3 |

| Component B | | | | | | | |
|---|---|---|---|---|---|---|---|
| Tin 2-ethylhexanoate | 3 | 3 | 3 | 3 | 3 | 3 | 3 |
| Laurylamine | 1 | 1 | 1 | 1 | 1 | 1 | 1 |
| Calcium carbonate heavy 2) | 10 | 10 | 10 | 10 | 10 | 10 | 10 |
| DOP | 10 | | 10 | 10 | 10 | 10 | 10 |
| Polyether plasticizer 3) | | 10 | | | | | |
| 50% Modulus (N/cm²) | 13 | 12 | 13 | 14 | 15 | 12 | 11 |
| Tensile strength at break (N/cm²) | 59 | 65 | 60 | 60 | 62 | 73 | 48 |
| Elongation at break (%) | 720 | 750 | 700 | 730 | 690 | 850 | 640 |
| Cohesive failure ratio (%) | 100 | 100 | 100 | 100 | 100 | 30 | 100 |
| Elastic hardness ratio of after 1 days/after 7 days | 0.7 | 0.8 | 0.7 | 0.7 | 0.7 | 0.8 | 0.5 |

The entire disclosure of Japanese Patent Application No. 2001-171248 filed on June 6, 2001 including specification, claims and summary are incorporated herein by reference in its entirety.

## Claims

1. A curable composition comprising a reactive silicon group-containing oxyalkylene polymer (A1) having at least one group of the formula 1 at its molecular terminal and satisfying the following (a) to (c), and a curing accelerator:
-O-R⁰-SiXₐR¹ ₃₋ₐ Formula 1
wherein R⁰ is a C₁₋₂₀ bivalent hydrocarbon group which may have -CONH-, -O-, -S-, -CO- or -NH-, R¹ is a C₁₋₁₀ monovalent hydrocarbon group, X is a hydroxyl group or a hydrolysable group, and a is 1, 2 or 3, provided that when a plurality of R¹ are present, they may be the same or different from one another, and when a plurality of X are present, they may be the same or different from one another;
(a) the molecular weight per terminal group (M_{c}) is at least 5,000,
(b) the ratio (M_{w}/Mₙ) of the weight average molecular weight (M_{w}) to the number average molecular weight (Mₙ) is at least 1.5, and
(c) the main chain is an oxyalkylene polymer which is obtainable by ring-opening polymerization of a cyclic ether using an active hydrogen atom-containing compound as an initiator and which is composed solely of structures based on the initiator and the cyclic ether.

2. The curable composition according to Claim 1,
wherein the reactive silicon group-containing oxyalkylene polymer (A1) is a polymer obtainable by converting a terminal hydroxyl group of a hydroxyl group terminal oxyalkylene polymer (B1) satisfying the following (a), (b) and (d), to a group of the formula 1:
(a) the molecular weight per terminal group (M_{c}) is at least 5,000,
(b) the ratio (M_{w}/Mₙ) of the weight average molecular weight (M_{w}) to the number average molecular weight (Mₙ) is at least 1.5, and
(d) it is a hydroxyl group terminal oxyalkylene polymer which is obtainable by ring-opening polymerization of a cyclic ether using an active hydrogen atom-containing compound as an initiator and which is composed solely of structures based on the initiator and the cyclic ether.

3. The curable composition according to Claim 2,
wherein the hydroxyl group terminal oxyalkylene polymer (B1) is one of, or a mixture of two or more of, hydroxyl group terminal oxyalkylene polymers which are obtainable by ring-opening polymerization of a cyclic ether using an active hydrogen atom-containing compound as an initiator, in the presence of a catalyst.

4. The curable composition according to Claim 3,
wherein the catalyst is a double metal cyanide complex catalyst.

5. The curable composition according to Claim 1,
wherein the reactive silicon group-containing oxyalkylene polymer (A1) is a polymer obtainable by converting a group of the formula 2 in an oxyalkylene polymer (C1) having a group of the formula 2 at its molecular terminal and satisfying (a) to (c), to a group of the formula 1:
-O-R Formula 2
wherein R is a C₁₋₁₀ monovalent hydrocarbon group having an unsaturated bond.

6. The curable composition according to Claim 5,
wherein the oxyalkylene polymer (C1) is one of, or a mixture of two or more of, polymers which are obtainable by converting terminal hydroxyl groups of hydroxyl group terminal oxyalkylene polymers obtainable by ring-opening polymerization of a cyclic ether using an active hydrogen atom-containing compound as an initiator, in the presence of a catalyst, to groups of the formula 2.

7. The curable composition according to Claim 6,
wherein the catalyst is a double metal cyanide complex catalyst.
